Europäisches Patentamt

European Patent Office

Office européen des brevets

(19)

(11) **EP 0 756 432 B1**

(12) **FASCICULE DE BREVET EUROPEEN**

(45) Date de publication et mention
de la délivrance du brevet:
**04.06.2003 Bulletin 2003/23**

(51) Int Cl.⁷: **H04Q 7/38**, H04Q 7/28

(21) Numéro de dépôt: **96401652.1**

(22) Date de dépôt: **24.07.1996**

(54) **Dispositif de sélection de canal pour système de transmission directe entre mobiles**

Einrichtung zur Funkkanalauswahl für System zur Direktübertragung zwischen Mobilen

Arrangement for selecting radio channel for direct-mode transmission system between mobiles

(84) Etats contractants désignés:
**AT BE CH DE DK ES FI GB IT LI NL SE**

(30) Priorité: **27.07.1995 FR 9509155**

(43) Date de publication de la demande:
**29.01.1997 Bulletin 1997/05**

(73) Titulaire: **ALCATEL**
**75382 Paris Cédex 08 (FR)**

(72) Inventeurs:
• **Le Strat, Evelyne**
**75015 Paris (FR)**
• **Delprat, Marc**
**78150 Le Chesnay (FR)**

(74) Mandataire: **El Manouni, Josiane et al**
**Compagnie Financière Alcatel**
**Départememt de Propriété Industrielle,**
**5, rue Noel Pons**
**92734 Nanterre Cedex (FR)**

(56) Documents cités:
• **PATENT ABSTRACTS OF JAPAN vol. 95, no. 004 & JP 07 107558 A (MATSUSHITA ELECTRIC IND CO LTD), 21 Avril 1995,**
• **PATENT ABSTRACTS OF JAPAN vol. 95, no. 004 & JP 07 107559 A (MATSUSHITA ELECTRIC IND CO LTD), 21 Avril 1995,**

**Description**

La présente invention concerne un dispositif de sélection de canal pour système de transmission directe entre mobiles, à accès multiple.

on entend par transmission directe entre mobiles un mode de communication non relayé, c'est-à-dire sans intervention d'une infrastructure, entre deux ou plusieurs mobiles d'un même groupe situés dans une zone géographique donnée. Compte tenu de la puissance limitée des mobiles, ces communications directes ne dépassent pas quelques kilomètres de portée. Ce mode de fonctionnement est particulièrement intéressant comme complément au mode relayé habituel offert par un système de radiocommunications mobiles. Il permet de communiquer même en dehors de la zone de couverture de l'infrastructure. Mais il peut également être utilisé sous la couverture de l'infrastructure, par exemple pour ne pas charger le système ou parce qu'une partie seulement du groupe est sous couverture.

Par système à accès multiple on entend un système de partage de ressources de transmission permettant plusieurs communications simultanées sur des canaux distincts, à l'aide d'un multiplex qui peut être soit fréquentiel (Accès Multiple à Répartition Fréquentielle, ou AMRF), soit temporel (Accès Multiple à Répartition Temporelle, ou ARMF) soit à répartition par codes (Accès Multiple à Répartition par Codes, ou AMRC).

En mode relayé l'allocation des ressources radio est généralement coordonnée par l'infrastructure à partir d'une planification cellulaire pré-définie et d'une gestion dynamique permettant d'allouer les différents canaux offerts par le système d'accès multiple considéré, aux différentes communications. En mode direct, l'absence de cette coordination centralisée impose des règles de sélection des canaux (généralement manuelle) et une certaine discipline des utilisateurs. En pratique, les utilisateurs d'un groupe conviennent au préalable de se retrouver sur un canal donné (typique en radiotéléphonie professionnelle, ou PMR : "Professional Mobile Radio") ou utilisent un canal de ralliement (ou canal de contrôle) commun à plusieurs groupes avant de "basculer" sur un autre canal dédié (cas du système DSRR : "Digital Short Range Radio").

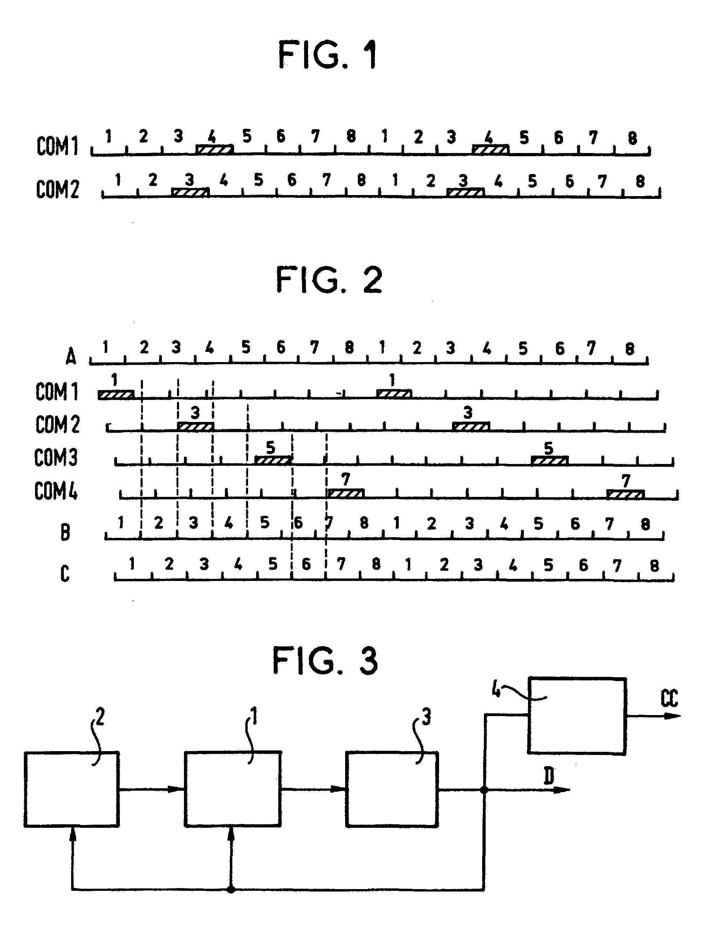

Des problèmes spécifiques apparaissent lorsque le mode direct est défini en complément d'un mode relayé existant et fonctionnant en AMRT (Accès Multiple à Répartition Temporelle) : cas des systèmes GSM et TETRA notamment. En effet, la solution naturelle serait de reproduire le même fonctionnement AMRT pour le mode direct afin de minimiser les efforts de spécification et de faciliter la réalisation d'un terminal mobile intégrant à la fois les modes relayé et direct. Mais en mode direct, en l'absence de référence temporelle absolue en dehors de la couverture de l'infrastructure, il ne semble pas évident de gérer l'utilisation des canaux par partage temporel comme c'est le cas en AMRT. Par exemple, supposons que deux groupes démarrent des communications en mode direct sur la même fréquence mais sur des canaux différents (c'est-à-dire sur des intervalles de temps différents); comme ces deux groupes ont à priori des références temporelles quelconques et indépendantes, il se peut très bien que les intervalles de temps utilisés se recouvrent au moins partiellement et que donc les communications se perturbent mutuellement, comme illustré sur la figure 1 pour le cas de deux communications, notées COM1 et COM2, utilisant par exemple respectivement, les intervalles de temps 4 et 3 d'une structure de trame à huit intervalles de temps numérotés de 1 à 8.

Dans le système TETRA, ce problème a été simplement résolu en prenant comme hypothèse de base qu'une seule communication par fréquence serait possible en mode direct. Il s'agit d'une solution simplificatrice mais gourmande en termes d'utilisation du spectre. De ce point de vue, ce qui est peut-être acceptable dans le cas du système TETRA où les fréquences sont espacées de 25 kHz devient exorbitant dans le cas du système GSM où l'espacement est de 200 kHz.

La nature non coordonnée des communications en mode direct est donc particulièrement pénalisante dans le cas d'un système AMRT, pour lequel il semble à priori difficile d'envisager plus d'une communication par fréquence dans une zone donnée sans risquer que les communications se brouillent entre elles. Mais même dans le cas d'une transmission en mode direct en AMRF ("Accès Multiple à Répartition Fréquentielle") ou en AMRC "Accès Mutiple à Répartition par Codes"), des dysfonctionnements liés aux perturbations entre les communications d'une même zone peuvent fréquemment survenir, principalement pour deux raisons :

- le canal de trafic sélectionné au début de la communication peut être en fait occupé par une communication dans la même zone qui était inactive au moment de la mesure mais qui redevient active par la suite;
- deux communications dans deux zones distinctes mais proches peuvent s'établir sur le même canal et peuvent ensuite se perturber si les deux groupes se rapprochent.

Ainsi dans le système DSRR ("Digital Short Range Radio") est défini un mode direct avec transmission numérique AMRF dans des canaux de 25 kHz. Il y a également un mode répéteur dans lequel l'un des mobiles sert de relais. La bande de fréquence (dans les 900 MHz) comprend 2 canaux de contrôle et 76 canaux de trafic. Le canal de contrôle est utilisé dans la phase d'établissement d'appel pour transmettre des informations de synchronisation et de signalisation et le canal de trafic est sélectionné soit par le mobile appelant soit par le mobile relais dans le cas du mode répéteur. Dans tous les cas, la sélection du canal de trafic repose sur la recherche préalable d'un canal libre par des mesures radio adéquates. Cependant ce mode de sélection ne garantit un fonctionnement correct qu'au début de la communication. En effet il se peut que le canal sélectionné soit en fait occupé par une autre communication qui n'était pas active au moment de la mesure mais qui le redevient ensuite. Par ailleurs, en raison de la nature mobile des utilisateurs, deux groupes situés initialement dans des zones différentes peuvent sélectionner le même canal de trafic et vont ensuite se perturber mutuellement s'ils se rapprochent.

Le document PATENT ABSTRACTS OF JAPAN vol. 95, no. 004 & JP 07 107558 A (MATSUSHITA ELECTRIC IND CO LTD), 21 Avril 1995, décrit un système dans lequel, lorsqu'une interférence avec une autre communication est générée dans le cas de communication directe entre mobiles, un traitement de commutation de canal est effectué.

La présente invention a notamment pour but d'éviter les inconvénients précités.

La présente invention a ainsi pour objet un dispositif de sélection de canal pour système de transmission directe entre mobiles, à accès multiple, ce dispositif étant essentiellement caractérisé en ce qu'il comporte des moyens pour effectuer, en cours de communication, des mesures sur différents canaux afin de déterminer s'il existe un meilleur canal que le canal dit de trafic utilisé pour cette communication, ce meilleur canal constituant le nouveau canal de trafic à utiliser.

D'autres objets et caractéristiques de la présente invention apparaîtront à la lecture de la description suivante d'un exemple de réalisation, faite en relation avec les dessins ci-annexés dans lesquels :

- la figure 1 illustre le cas de deux communications se perturbant mutuellement, dans un système de transmission directe entre mobiles du type AMRT,
- la figure 2 illustre le décalage temporel appliqué à un mobile effectuant une sélection de canal suivant l'invention dans le cas d'un système de transmission directe entre mobiles du type AMRT,
- la figure 3 est un schéma destiné à illustrer un exemple de réalisation d'un dispositif suivant l'invention.

L'invention consiste essentiellement à adjoindre au mode de transmission prévu pour le mode direct (que ce soit en AMRT, en AMRC ou en AMRF) un mécanisme de sélection dynamique de canal suivant lequel on effectue, en cours de communication, des mesures sur différents canaux afin de déterminer s'il existe un meilleur canal que le canal de trafic utilisé pour cette communication, ce meilleur canal constituant le nouveau canal de trafic à utiliser.

Par exemple, suivant le mode de réalisation décrit dans ce qui suit :

- on effectue, en cours de communication, des mesures sur le canal de trafic utilisé, afin de déterminer si la transmission sur ce canal de trafic n'est pas trop perturbée,
- on sélectionne un nouveau canal de trafic s'il est déterminé que cette transmission est trop perturbée.

La sélection du canal de trafic au début de la communication peut se faire, de manière connue:

- soit, de manière très simple, par rendez-vous sur un canal pré-défini, sans vérification que celui-ci est libre, ce mobile informant alors les autres mobiles du groupe au moyen d'un canal de contrôle commun.
- soit, plus efficacement, à l'aide de mesures radio adéquates effectuées généralement par le mobile qui établit l'appel, afin d'identifier un canal de trafic libre, ce mobile informant alors les autres mobiles du groupe de l'identité de ce canal au moyen d'un canal de contrôle commun.

Les mesures effectuées en cours de communication sur le canal de trafic utilisé, afin de déterminer si la transmission sur ce canal de trafic n'est pas trop perturbée, peuvent être effectuées :

- soit par un mobile émetteur si celui-ci dispose d'intervalles de temps réguliers pendant lesquels il peut interrompre la transmission et "basculer" en réception pour écouter le canal de trafic, en mesurant le niveau reçu sur ce canal, et déterminer si ce niveau, qui constitue le niveau d'interférence pour la communication en cours, est acceptable (c'est-à-dire inférieur à un seuil donné), ou s'il faut changer de canal;
- soit par un mobile récepteur, qui :

  . si une transmission est en cours, mesure la qualité du signal reçu sur le canal de trafic et détermine ainsi si cette qualité est acceptable, (c'est-à-dire supérieure à un seuil donné), ou s'il faut changer de canal de trafic,
  . si une transmission n'est pas en cours, mesure le niveau reçu sur le canal de trafic et détermine si ce niveau, qui constitue le niveau d'interférence pour la communication en cours, est acceptable (c'est-à-dire inférieur à un seuil donné) ou s'il faut changer de canal.

La sélection d'un nouveau canal de trafic consiste essentiellement à effectuer successivement, par un mobile émetteur ou par un mobile récepteur, des mesures de niveau reçu sur différents canaux autres que le canal de trafic en cours, jusqu'à détecter un canal satisfaisant (c'est-à-dire pour lequel ce niveau est inférieur à un seuil donné), ou le meilleur de tels canaux jugés satisfaisants, le canal ainsi détecté constituant le nouveau canal de trafic.

Dans le cas d'un système AMRT par exemple on pourra ainsi rechercher un canal temporel (ou intervalle de temps) satisfaisant, en mesurant successivement le niveau reçu pour chacun des intervalles de temps autres que l'intervalle de temps utilisé pour la communication en cours, puis, si aucun n'est satisfaisant, répéter l'opération en décalant temporellement la structure de trame du mobile qui fait cette sélection d'une fraction d'intervalle de temps, (par exemple d'un quart d'intervalle de temps ou d'un demi-intervalle de temps) pour tenir compte d'un possible décalage temporel entre la référence temporelle du groupe auquel appartient le mobile qui fait les mesures et la référence temporelle de chacun des autres groupes ayant une communication en cours.

Un tel décalage temporel est illustré sur la figure 2, où l'on a représenté, à titre d'exemple, le cas de quatre communications notées respectivement COM1, COM2, COM3 et COM4, utilisant respectivement les intervalles de temps n°1, n°3, n°5 et n°7 d'une structure de trame à huit intervalles de temps.

Si la référence temporelle du mobile qui effectue une sélection de canal est telle que la structure de trame élaborée par ce mobile est celle représentée en A, on voit que tous les intervalles de temps de cette structure de trame sont (partiellement) occupés.

Par contre, lorsqu'on décale cette structure de trame de l'ordre d'$\frac{1}{4}$ d'intervalle de temps, tel que représenté en B, on trouve alors deux intervalles de temps disponibles, en l'occurrence les intervalles de temps n°2 et n°4.

Un troisième intervalle de temps disponible, en l'occurence l'intervalle de temps n°6, peut être trouvé avec un décalage de l'ordre de $\frac{3}{4}$ d'intervalle de temps, tel qu'illustré en C.

En fait, pour être sûr de trouver tous les intervalles de temps disponibles, il faudrait théoriquement essayer tous les décalages possibles, c'est-à-dire avoir une fenêtre glissante de la taille d'un intervalle de temps et que l'on ferait glisser d'un échantillon à la fois, mais ceci peut se révéler relativement coûteux en temps de calcul.

Dans le cas d'un système AMRT, la transmission étant discontinue, l'écoute des canaux autres que le canal de trafic en cours se fera simplement pendant les périodes de temps séparant les intervalles utilisés pour le trafic.

Dans le cas d'un système AMRF ou AMRC, la transmission pouvant être continue, il pourra être nécessaire d'interrompre cette transmission pour effectuer cette écoute.

Le terminal qui procède ainsi à la sélection d'un nouveau canal de trafic informe alors le ou les autres terminaux du groupe de l'identité du nouveau canal de trafic à utiliser, ainsi que, le cas échéant, dans l'exemple cité ci-dessus d'application à un système AMRT, du décalage temporel opéré pour trouver un intervalle de temps satisfaisant, ce décalage temporel devant également être appliqué aux autres terminaux du groupe.

Les terminaux à informer de l'identité du nouveau canal de trafic à utiliser peuvent être constitués soit, dans un mode dit de base, par les terminaux du groupe qui participent à la communication en cours, soit, dans un mode incluant des fonctionnalités supplémentaires telles que celles dites d'entrée différée ou de double veille, par l'ensemble des terminaux du groupe.

On rappelle que la fonctionnalité dite d'entrée différée (ou "Late Entry") permet & des utilisateurs retardataires (non présents au moment de l'établissement de l'appel) de rejoindre l'appel en cours de communication, permettant ainsi un fonctionnement du type canal ouvert. Pour réaliser cette fonctionnalité en mode direct, il faut que l'un des mobiles impliqués dans la communication en mode direct diffuse périodiquement sur un canal connu un message d'entrée différée (synchronisation, signalisation d'établissement d'appel). Ce canal connu sera ici constitué par le canal de contrôle du mode direct s'il en existe un, ou encore par le canal de contrôle du mode relayé si l'on se trouve sous la couverture de l'infrastructure et à condition que celle-ci soit informée des appels en cours en mode direct.

On rappelle également que la fonctionnalité dite de double veille permet, lorsqu'un mobile se trouve sous la couverture de l'infrastructure, de surveiller les appels en mode relayé tout en fonctionnant en mode direct et réciproquement. Pour cela, le mobile fonctionnant en mode direct doit être également synchronisé sur une station de base de l'infrastructure et doit "écouter" périodiquement le canal de contrôle de cette station de base afin de capter les messages d'établissement d'appel en mode relayé qui pourraient le concerner. Inversement, le mobile fonctionnant en mode relayé doit écouter le canal commun du mode direct afin de capter les messages d'établissement d'appel en mode dirct qui pourraient le concerner.

Le terminal qui procède à la sélection d'un nouveau canal de trafic peut être soit celui qui détecte que la transmission sur le canal de trafic en cours est trop perturbée et qu'il y a donc lieu de sélectionner un nouveau canal de trafic, soit un autre terminal à condition que celui-ci ait été préalablement informé, par le terminal ayant détecté que la transmission sur le canal de trafic en cours est trop perturbée, de la nécessité de sélectionner un nouveau canal de trafic.

Les diverses informations ainsi échangées constituent des informations de signalisation qui s'ajoutent aux informations de signalisation déjà transmises dans les systèmes considérés et qui pourront donc utiliser les mêmes principes de transmission, non rappelés ici.

Avec un tel système, du type AMRT, il devient ainsi possible de passer plusieurs communications par fréquence dans une zone donnée. Il n'est à priori pas possible de charger complètement une fréquence (par exemple 8 communications plein débit par fréquence dans le système GSM) car ceci supposerait une synchronisation parfaite entre les communications dans une même zone, mais en mettant en oeuvre une procédure adéquate de sélection du canal il est possible d'atteindre au moins la moitié de la capacité théorique maximum.

La figure 3 est un schéma destiné à illustrer un exemple de réalisation d'un dispositif suivant l'invention.

Ce dispositif comporte :

- des moyens, 1, pour effectuer des mesures sur un canal donné, noté Ci, ces mesures étant, comme indiqué précédemment, soit des mesures de niveau reçu, soit des mesures de qualité de signaux reçus, et ces mesures pouvant être effectuées suivant des techniques connues, non rappelées ici,
- des moyens, 2, pour recevoir le canal à mesurer Ci et le sélectionner parmi un ensemble de canaux possibles $C_1$ à $C_n$, ce canal Ci étant, comme indiqué précédemment, soit le canal de trafic en cours (s'il s'agit de déterminer si ce canal de trafic n'est pas trop perturbé) soit un autre canal (s'il s'agit de sélectionner un nouveau canal de trafic) et dans ce dernier cas, comme indiqué également précédemment, la succession des différents canaux étant envisagée,
- des moyens 3 permettant essentiellement de comparer par rapport à un seuil adéquat les résultats de mesure issus des moyens 1, et éventuellement de comparer entre eux plusieurs de ces résultats de mesure, tel qu'indiqué précédemment.

Le résultat issu des moyens 3 est une décision, notée D, consistant soit dans la conservation du canal de trafic en cours, soit dans la commande de sélection d'un nouveau canal de trafic, soit, dans le cas de commande de sélection d'un nouveau canal de trafic et dans le cas d'un système AMRT, dans une commande de décalage temporel à appliquer à la référence temporelle du terminal mobile incluant le dispositif considéré, soit dans l'identité du nouveau canal de trafic sélectionné.

Cette décision, qui constitue la sortie de ce dispositif, est en outre appliquée :

- à une entrée de commande des moyens 2, en vue de sélectionner le prochain canal à mesurer, tel qu'il découle du fonctionnement décrit précédemment, ainsi que éventuellement, dans le cas d'un système AMRT, en vue d'appliquer une commande de décalage temporel adéquat à la référence temporelle du terminal mobile considéré,
- à une entrée de commande des moyens de mesure 1, en vue de déterminer le seuil à utiliser par les moyens 3, tel qu'il découle également du fonctionnement décrit précédemment,
- à une entrée de commande de moyens 4 d'émission de canal de contrôle commun, noté CC (ces moyens étant prévus par ailleurs, de manière classique, dans le terminal mobile incluant le dispositif considéré) afin de transmettre les messages de signalisation générés par ce mécanisme de sélection de canal, tel que décrit précédemment.

Le dispositif de sélection de canal suivant l'invention, tel qu'illustré sur la figure 3 par exemple, est destiné à être inclus dans des terminaux mobiles susceptibles d'utiliser le mode direct.

On notera que la présente invention n'est pas limitée au mode de réalisation ainsi décrit. Notamment il n'est pas nécessaire d'attendre de déterminer que le canal de trafic soit trop perturbé pour procéder à la sélection d'un nouveau canal de trafic; des mesures pourront au contraire être effectuées régulièrement, ou même en permanence, afin de déterminer s'il existe un meilleur canal que ce canal de trafic.

## Revendications

1. Dispositif de sélection de canal pour système de transmission directe entre mobiles, à accès multiple, **caractérisé en ce qu'**il comporte des moyens pour effectuer, en cours de communication, des mesures sur différents canaux afin de déterminer s'il existe un meilleur canal que le canal dit de trafic utilisé pour cette communication, sans qu'il soit nécessaire d'attendre que le canal de trafic soit trop perturbé, ce meilleur canal constituant le nouveau canal de trafic à utiliser.

2. Dispositif selon la revendication 1, **caractérisé en ce que** lesdites mesures sont effectuées régulièrement.

3. Dispositif selon la revendication 1, **caractérisé en ce que** lesdites mesures sont effectuées en permanence.

4. Dispositif selon la revendication 1, **caractérisé en ce qu'**il comporte des moyens pour effectuer successivement des mesures de niveau reçu sur différents canaux autres que ledit canal de trafic utilisé, jusqu'à détecter un canal satisfaisant, ce canal constituant ledit nouveau canal de trafic.

5. Dispositif selon la revendication 4, pour système à accès multiple à répartition temporelle, **caractérisé en ce que** lesdits moyens (1, 2, 3) pour sélectionner un nouveau canal de trafic comportent en outre des moyens permettant, si aucun canal satisfaisant n'est détecté, de renouveler lesdites mesures de niveau après avoir appliqué un décalage temporel à la référence temporelle du terminal mobile incluant lesdits moyens.

6. Dispositif selon l'une des revendications 1 à 5, **ca-**

**ractérisé en ce que**, ce dispositif étant inclus dans un terminal mobile comportant des moyens (4) d'émission d'un canal de contrôle commun (cc), ce dispositif comporte en outre des moyens pour transmettre l'identité du nouveau canal de trafic sur ce canal de contrôle commun.

7. Terminal mobile, comportant un dispositif selon l'une des revendications 1 à 6.

**Patentansprüche**

1. Vorrichtung zur Kanalauswahl für ein System zur Direktübertragung zwischen Mobilen, mit Vielfachzugriff, **dadurch gekennzeichnet, dass** es Mittel umfasst, um im Laufe einer Kommunikation Messungen an verschiedenen Kanälen durchzuführen, um festzulegen, ob es einen besseren Kanal als den für diese Kommunikation verwendeten, als Verkehrskanal bezeichneten Kanal gibt, ohne dass es notwendig ist, zu warten, dass der Verkehrskanal zu stark gestört ist, wobei dieser bessere Kanal den neuen zu verwendenden Verkehrskanal darstellt.

2. Vorrichtung nach Anspruch 1, **dadurch gekennzeichnet, dass** die Messungen regelmäßig durchgeführt werden.

3. Vorrichtung nach Anspruch 1, **dadurch gekennzeichnet, dass** die Messungen ständig durchgeführt werden.

4. Vorrichtung nach Anspruch 1, **dadurch gekennzeichnet, dass** sie Mittel umfasst, um nacheinander Messungen des auf anderen Kanälen als dem verwendeten Verkehrskanal empfangenen Pegels durchzuführen, bis ein befriedigender Kanal erfasst wird, welcher den neuen Verkehrskanal bildet.

5. Vorrichtung nach Anspruch 4 für ein System mit Vielfachzugriff im Zeitmultiplex, **dadurch gekennzeichnet, dass** die Mittel (1, 2, 3) zum Auswählen eines neuen Verkehrskanals ferner Mittel umfassen, die es ermöglichen, wenn kein befriedigender Kanal erfasst wird, die Pegelmessungen zu erneuern, nachdem eine Zeitverschiebung an der Zeitreferenz des die Mittel enthaltenden mobilen Endgeräts vorgenommen worden ist.

6. Vorrichtung nach einem der Ansprüche 1 bis 5, **dadurch gekennzeichnet, dass** die Vorrichtung in einem mobilen Endgerät mit Mitteln (4) zum Senden eines gemeinsamen Steuerkanals (cc) enthalten ist, und dass die Vorrichtung ferner Mitrel zum Übertragen der Identität des neuen Verkehrskanals auf diesem gemeinsamen Steuerkanal umfasst.

7. Mobiles Endgerät mit einer Vorrichtung nach einem der Ansprüche 1 bis 6.

**Claims**

1. Channel selector device for a multiple access system of direct transmission between mobile stations, **characterized in that** it includes means for carrying out measurements on various channels during calls in order to determine if there is a better channel than the traffic channel used for said call, without it being necessary to wait for the traffic channel to be subject to excessive interference, said better channel constituting the new traffic channel to be used.

2. Device according to claim 1 **characterized in that** said measurements are carried out at regular intervals.

3. Device according to claim 1 **characterized in that** said measurements are carried out continuously.

4. Device according to claim 1 **characterized in that** it includes means for carrying out successive measurements of the received level on various channels other than said traffic channel in use until a satisfactory channel is detected, this latter channel constituting said new traffic channel.

5. Device according to claim 4 for a time-division multiple access system **characterized in that** said means (1, 2, 3) for selecting a new traffic channel further include means for repeating said level measurements if no satisfactory channel is detected after applying a time shift to the time reference of the mobile terminal including said means.

6. Device according to any of claims 1 to 5 **characterized in that**, said device being included in a mobile terminal including means (4) for sending a common control channel (cc), said device further includes means for transmitting the identity of the new traffic channel on said common control channel.

7. Mobile terminal including a device according to any of claims 1 to 6.

# FIG. 1

# FIG. 2

# FIG. 3